# EUROPÄISCHE PATENTSCHRIFT

(11) **EP 2 868 181 B1**
(45) Veröffentlichungstag und Bekanntmachung des Hinweises auf die Patenterteilung: **15.03.2017**
(21) Anmeldenummer: 14003235.0
(22) Anmeldetag: 18.09.2014
(51) Int. Cl.: A01C 7/20, A01B 49/06

(54) **Landwirtschaftliche Verteilmaschine**
Agricultural distributor
Épandeur agricole

(30) Priorität: 29.10.2013 DE 102013017901
(43) Veröffentlichungstag der Anmeldung: 06.05.2015
(73) Patentinhaber: RAUCH Landmaschinenfabrik GmbH, 76547 Sinzheim (DE)
(72) Erfinder: Dircks, Hartmut, D-76547 Sinzheim (DE); Klein, Frederic, F-6700 Strasbourg (FR); Schickinger, Manfred, D-76547 Sinzheim (DE); Schäfer, Fabian, D-76473 Iffezheim (DE)
(74) Vertreter: Lichti - Patentanwälte Partnerschaft mbB

(56) Entgegenhaltungen:
- EP-A1- 1 787 503
- DE-A1- 19 954 423
- DE-A1-102004 008 650

## Beschreibung

Die Erfindung betrifft eine landwirtschaftliche Verteilmaschine, insbesondere Sämaschine, mit einem von einem Tragrahmen getragenen Vorratsbehälter zur Aufnahme von Streugut, wenigstens einem einer Auslauföffnung des Vorratsbehälters nachgeordneten Dosierorgan sowie Fördermitteln, welche zur Förderung des dosierten Streugutes an eine Mehrzahl von Verteileinrichtungen ausgebildet sind, wobei der Tragrahmen einerseits zwei jeweils an dessen Unterseite und unter seitlichem Abstand voneinander angeordnete Tragschuhe aufweist, welche zur Befestigung eines ersten Bodenbearbeitungsgerätes ausgebildet sind, und wobei der Tragrahmen andererseits einen, insbesondere unter im Wesentlichen gleichem Seitenabstand von den Tragschuhen angeordneten, Lagerbock aufweist, welcher zur Lagerung eines Oberlenkers zur lösbaren Befestigung des Tragrahmens an einem zweiten Bodenbearbeitungsgerät oder an einer Zugmaschine ausgebildet ist. Eine solche Sämaschine ist in der EP 1 787 503 A1 beschrieben.

Verteilmaschinen der vorgenannten Art finden in der Landwirtschaft zum Ausbringen von Saatgut oder Dünger verbreitet Verwendung. Dabei wird das in einem Vorratsbehälter befindliche Streugut mittels des üblicherweise unterhalb einer Auslauföffnungen des Vorratsbehälters angeordneten Dosierorgans dosiert und wird der dosierte Massenstrom an Streugut an eine Mehrzahl an dem Dosierorgan nachgeordneten Verteilorganen überführt. Sofern es sich bei der Verteilmaschine z.B. um eine solche mit pneumatischem Antrieb der Fördermittel handelt, so kann das dosierte Streugut mittels eines Gebläses mit Druckluft beaufschlagt und an eine Förderleitung übergeben werden, welche den in den Druckluftstrom eindispergierten, dosierten Streugutstrom einem Verteilerkopf aufgibt. Der Verteilerkopf umfasst eine Mehrzahl an Abgängen, welche üblicherweise um seinen Umfang verteilt angeordnet sind und an welche sich je eine Verteilerleitung anschließt, welche dazu dient, den Streugutstrom in einen der Anzahl an Verteilerleitungen entsprechenden Teilströmen je einer Verteileinrichtung zuzuführen, welche mit unterschiedlichem Seitenabstand von der Verteilmaschine angeordnet sind.

Handelt es sich bei der Verteilmaschine beispielsweise um einen Düngerstreuer, so können die Verteileinrichtungen z.B. von am Ende der Verteilleitungen befindlichen Prallplatten gebildet sein. Handelt es sich hingehen bei der Verteilmaschine beispielsweise um eine Sämaschine, so können die Verteileinrichtungen z.B. Säscharen umfassen, um das Saatgut in den Boden einzubringen. Derartige Verteilmaschinen sind auch in Form von pneumatischen Sämaschinen unter anderem aus den DE 44 34 963 A1, DE 197 47 029 A1, DE 10 2010 053 883 A1, EP 0 796 553 A2, DE 10 2004 008 650 A1 oder DE 198 35 125 A1 bekannt.

Der insbesondere in seinem mit dem Streugut befüllten Zustand sehr schwere Vorratsbehälter ist bei bekannten Verteilmaschinen in Form von Sämaschinen üblicherweise an einer Tragkonstruktion angeordnet, welche sich unterhalb des Vorratsbehälters erstreckt und diesen abstützt. Die Tragkonstruktion umfasst einerseits einen mittig angeordneten Lagerbock, welcher zur Lagerung eines Oberlenkers zur lösbaren Befestigung an dem Dreipunkt-Kraftheber einer Zugmaschine, wie eines Traktors, dient; andererseits weist die Tragkonstruktion zwei unter seitlichem Abstand angeordnete Tragschuhe auf, an welchen ein Bodenbearbeitungsgerät, wie beispielsweise eine Packerwalze, gelagert ist. An der in Fahrtrichtung vorderen, der Zugmaschine zugewandten Seite der Tragkonstruktion kann bedarfsweise ein weiteres Bodenbearbeitungsgerät, wie beispielsweise eine Kreiselegge, festgelegt werden. An der in Fahrtrichtung rückwärtigen, der Zugmaschine abgewandten Seite können insbesondere herkömmliche Säaggregate, wie Säscharen mit Scharscheiben, Andruckrollen und Zustreicheinrichtungen, den sogenannten Striegeln, angeordnet sein. Derartige Sä- oder Drillmaschinen sind gegenwärtig z.B. unter dem Handelsnamen "Solitair" der Firma *Lemken* oder unter dem Handelsnamen "AD-P" der Firma *Amazone* kommerziell erhältlich.

Als nachteilig erweist sich insbesondere die Tatsache, dass der Benutzer, welcher als Fahrer einer Zugmaschine bzw. eines Traktors die an dessen Dreipunkt-Kraftheber festgelegte Verteilmaschine üblicherweise hinter sich her zieht, das von der Verteilmaschine selbst und/oder von den hieran festgelegten Bodenbearbeitungsgeräten erzielte Ergebnis - sei es zu bloßen Kontrollzwecken oder sei es im Falle einer etwaigen Funktionsstörung - nicht beobachten kann, weil die Tragkonstruktion der Verteilmaschine und deren Bodenbearbeitungsgeräte die Sicht nach hinten und unten gänzlich verdecken. Darüber hinaus wäre es für den Landwirt wünschenswert, wenn die Bodenbearbeitungsgeräte auch getrennt von der eigentlichen Verteilmaschine genutzt werden könnten, um beispielsweise den (oberen) Boden eines Feldes zu lockern und gegebenenfalls rückzuverdichten, Unkraut zu bekämpfen oder dergleichen.

Der Erfindung liegt daher die Aufgabe zugrunde eine landwirtschaftliche Verteilmaschine der eingangs genannten Art auf einfache und kostengünstige Weise dahingehend weiterzubilden, dass den vorgenannten Problemen begegnet werden kann.

Erfindungsgemäß wird diese Aufgabe bei einer landwirtschaftlichen Verteilmaschine mit den Merkmalen des Anspruchs 1 gelöst.

Die erfindungsgemäße Ausgestaltung des Tragrahmens des Vorratsbehälters der landwirtschaftlichen Verteilmaschine macht jegliche Abstützung des Vorratsbehälters auf unterhalb des Lagerbockes und zwischen den beiden Tragschuhen angeordneten Tragelementen entbehrlich, so dass mangels Vorhandenseins derartiger, vornehmlich vertikaler Tragelemente die Sicht des Landwirtes, welcher die Verteilmaschine als Fahrer einer Zugmaschine bzw. eines Traktors hinter sich her zieht, nach hinten auf die bearbeitete Acker- oder Feldoberfläche weitestgehend frei bleibt. Der Vorratsbehälter ist erfindungsgemäß folglich im Wesentlichen von den äußeren Tragelementen abgestützt, welche praktisch das gesamte Gewicht des Vorratsbehälters aufnehmen und sich ihrerseits ausschließlich auf dem jeweiligen der beiden Tragschuhe abstützen. Dies gilt insbesondere dann, wenn sich die Verteilmaschine in horizontaler Arbeitsposition befindet, während in einer geneigten Arbeitsposition derselben, wie beispielsweise bei der Hangauf- oder -abfahrt, auch der Oberlenker einen Teil der Last aufnimmt. Hierbei bilden die unter den genannten Winkeln angeordneten äußeren und inneren Tragelemente eine außerordentlich stabile und verwindungssteife Tragkonstruktion, welche durch den sich oberhalb des Oberlenkers erstreckenden Querträger zusätzlich versteift ist. Sofern erforderlich oder gewünscht, kann zwecks Erzielung einer größtmöglichen Verwindungssteifigkeit des Tragrahmens im Bereich der unteren Enden der äußeren Tragelemente eine weitere Versteifung des Tragrahmens vorgesehen sein, welche sich beispielsweise in Form eines weiteren Querträgers zwischen den beiden Tragschuhen und etwa parallel zu dem zweiten Bodenbearbeitungsgerät erstreckt, wenn dieses an den Tragschuhen festgelegt worden ist. Mit dem Terminus "unter einem Winkel zwischen - 10° und 60° nach innen geneigt" in Bezug auf die äußeren Tragelemente ist im Übrigen gemeint, dass sich die äußeren Tragelemente in einem Winkelbereich von dem jeweiligen Tragschuh fort nach oben erstrecken können, welcher von "bis zu 10° nach außen" bis "bis zu 60° nach innen" in Bezug auf die parallel zur Fahrtrichtung angeordnete Vertikalebene als Bezugsebene reicht.

Wie weiter unten noch näher erläutert, macht es die erfindungsgemäße Ausgestaltung des Tragrahmens ferner möglich, das erste Bodenbearbeitungsgerät gänzlich von dem Tragrahmen zu lösen, um es - gegebenenfalls in Verbindung mit dem zweiten Bodenbearbeitungsgerät oder auch allein - ohne die eigentliche Verteilmaschine zu benutzen. Während des Betriebs der Verteilmaschine sorgt das an den Tragschuhen festgelegte erste Bodenbearbeitungsgerät folglich für eine weitere - bzw. für die einzige, sofern die Tragschuhe und/oder die unteren Enden der äußeren Tragelemente nicht durch einen weiteren Querträger miteinander verbunden sind - untere Aussteifung des Tragrahmens, indem das an den Tragschuhen befestigte erste Bodenbearbeitungsgerät Zugkräfte aufzunehmen vermag, wie sie insbesondere infolge des Gewichtes des Vorratsbehälters auftreten können.

In vorteilhafter Ausgestaltung kann vorgesehen sein, dass sich die äußeren Tragelemente und/oder die inneren Tragelemente, insbesondere sowohl die äußeren als auch die inneren Tragelemente, im Wesentlichen in je einer Ebene erstrecken, wobei diese Ebene(n) insbesondere parallel zur Fahrtrichtung angeordnet ist bzw. sind. Auf diese Weise ergibt sich eine besonders hohe "Durchsichtigkeit" des erfindungsgemäßen Tragrahmens durch diesen hindurch auf die in Fahrtrichtung hinter dem Tragrahmen befindlichen Verteileinrichtungen, wie z.B. Säscharen, sowie auf die fertig bearbeitete Bodenfläche, ohne die Stabilität und Steifigkeit des Tragrahmens zu beeinträchtigen.

Gemäß einer vorteilhaften Ausführungsvariante der äußeren Tragelemente des Tragrahmens kann vorgesehen sein, dass ein jeweiliges äußeres Tragelement je wenigstens ein tragendes Wandteil umfasst, dessen seitliche Ränder insbesondere von einem jeweiligen Tragschuh fort Wesentlichen V-förmig nach oben divergieren. Die äußeren Tragelemente können demnach von flächigen Elementen nach Art von Wandteilen gebildet sein, welche selbstverständlich insbesondere in den Richtungen höchster Last (z.B. im Wesentlichen vertikal, entlang der sich mit vertikaler Erstreckungsrichtungskomponente erstreckenden Ränder und/oder im Wesentlichen horizontal etwa parallel zum oberen Rand) mit geeigneten Verstärkungen, wie Rippen, Materialverstärkungen, Umbiegungen oder Umfalzungen, eingeschweißten oder eingeschraubten Streben oder dergleichen, versehen sein können.

Gemäß einer anderen vorteilhaften Ausführungsform der äußeren Tragelemente kann vorgesehen sein, dass ein jeweiliges äußeres Tragelement je wenigstens zwei Außenträger umfasst, welche im Bereich ihres dem Tragschuh fernen, oberen Endes mittels wenigstens eines Längsträgers miteinander verbunden sind, wobei die wenigstens zwei Außenträger insbesondere im Wesentlichen V-förmig von einem jeden Tragschuh fort nach oben divergieren. In diesem Fall bilden die - etwa parallelen oder insbesondere von unten nach oben divergierenden - Außenträger eines jeweiligen äußeren Tragelementes folglich gemeinsam mit dem Längsträger, welcher die Außenträger im Bereich ihres dem jeweiligen Tragschuh entgegengesetzten Endes miteinander verbindet, ein verwindungssteifes Mehreck, insbesondere im Wesentlichen ein Dreieck, dessen unterer Punkt in einen jeweiligen Tragschuh hineinläuft, was gleichfalls für eine hohe Stabilität und Steifigkeit sorgt.

Sofern die äußeren Tragelemente Wandteile der oben genannten Art umfassen, kann in vorteilhafter Ausgestaltung vorgesehen sein, dass sich der wenigstens eine, die äußeren Tragelemente miteinander verbindende Querträger zwischen je einem seitlichen Rand oder einem oberen Rand eines jeweiligen äußeren Tragelementes, insbesondere zwischen je zwei Eckbereichen des äußeren Tragelementes zwischen seinem seitlichen Rand und seinem oberen Rand, erstreckt. Dabei können die Tragelemente zwecks Gewährleistung einer sehr hohen Stabilität und Steifigkeit des Tragrahmens insbesondere zumindest an den Stellen, an welchen sie mit dem sie miteinander verbindenden Querträger verbunden sind, mit den entsprechenden Verstärkungen versehen sein, wie sie oben beispielhaft angegeben sind.

Sofern die äußeren Tragelemente hingegen wenigstens zwei Außenträger umfassen, welche im Bereich ihres dem Tragschuh fernen, oberen Endes mittels des wenigstens einen Längsträgers miteinander verbunden sind, kann in vorteilhafter Ausgestaltung vorgesehen sein, dass sich der die äußeren Tragelemente miteinander verbindende Querträger zwischen je einem der Außenträger eines jeweiligen äußeren Tragelementes oder zwischen den die jeweiligen Außenträger miteinander verbindenden Längsträgern erstrecken. Auch in diesem Fall kann es aus den genannten Gründen günstig sein, wenn der Querträger an oder nahe dem Verbindungsbereich eines der Außenträger mit dem Längsträger des jeweiligen äußeren Tragelementes an letzteren festgelegt ist. Die Verwindungssteifigkeit des Tragrahmens wird auf diese Weise folglich einerseits durch den Querträger, welcher je einen eines jeweiligen Paares der Außenträger und/oder die sie miteinander verbindenden Längsträger miteinander verbindet, andererseits durch die beiden inneren Tragelemente, welche sie mit dem Lagerbock verbinden, komplettiert.

Gemäß einer vorteilhaften Ausführungsvariante der inneren Tragelemente kann wiederum vorgesehen sein, dass ein jeweiliges inneres Tragelement je wenigstens ein tragendes Wandteil umfasst, dessen seitliche Ränder insbesondere von - senkrecht zur Fahrtrichtung - entgegengesetzten Enden des Lagerbockes fort im Wesentlichen V-förmig in Richtung des jeweiligen äußeren Tragelementes divergieren. Entsprechend der weiter oben beschriebenen Ausgestaltung der äußeren Tragelemente können auch die inneren Tragelemente demnach von flächigen Elementen nach Art von Wandteilen gebildet sein, welche selbstverständlich gleichfalls insbesondere in den Richtungen höchster Last (z.B. im Wesentlichen horizontal, entlang der sich von innen nach außen erstreckenden Ränder und/oder im Wesentlichen senkrecht hierzu etwa parallel zu den äußeren, den äußeren Tragelementen zugewandten Rändern) mit geeigneten Verstärkungen, wie Rippen, Materialverstärkungen, Umbiegungen oder Umfalzungen, eingeschweißten oder eingeschraubten Streben oder dergleichen, versehen sein.

Gemäß einer anderen vorteilhaften Ausführungsvariante der inneren Tragelemente kann wiederum vorgesehen sein, dass ein jeweiliges inneres Tragelement je wenigstens zwei Innenträger umfasst, welche insbesondere im Wesentlichen V-förmig von - senkrecht zur Fahrtrichtung - entgegengesetzten Enden des Lagerbockes fort in Richtung des jeweiligen äußeren Tragelementes divergieren. Die Innenträger eines jeweiligen Paares von Innenträgern sind folglich vorzugsweise mit ihrem einen Ende an entgegengesetzten, senkrecht zur Fahrtrichtung weisenden (also nach rechts und nach links) Enden des Lagerbockes festgelegt und erstrecken sich von dort jeweils unter zunehmendem Abstand zwischen denselben in Richtung eines jeweiligen äußeren Tragelementes, an welchem die Innenträger mit ihrem anderen Ende befestigt sind. Dabei können die - etwa parallelen oder insbesondere von innen nach außen divergierenden - Innenträger eines jeweiligen inneren Tragelementes gemeinsam mit dem jeweiligen äußeren Tragelement, an welchem sie festgelegt sind, ein verwindungssteifes Mehreck, insbesondere im Wesentlichen ein Dreieck, bilden, was gleichfalls für eine hohe Stabilität und Steifigkeit sorgt. Folglich ist eine verwindungssteife und stabile Anordnung des Lagerbockes an dem Tragrahmen mittels der beiden Paare von Innenträgern sichergestellt, welche überdies den gesamten Tragrahmen aussteifen. Sofern die äußeren Tragelemente ihrerseits von Außenträgern der weiter oben genannten Art gebildet sind, kann die Befestigung der Innenträger vorzugsweise entweder an dem jeweiligen Längsträger und/oder an je einem der Außenträger eines jeweiligen äußeren Tragelementes und/oder an dem Querträger erfolgen, wobei es in diesem Fall von Vorteil sein kann, wenn je ein Innenträger im Bereich des Befestigungspunktes je eines Außenträgers mit dem Längsträger an dem äußeren Tragelement befestigt ist und sich auch der wenigstens eine Querträger zwischen zumindest zwei solcher Befestigungspunkte der beiden äußeren Tragelemente erstreckt.

In diesem Zusammenhang sei grundsätzlich darauf hingewiesen, dass die Befestigung der äußeren und inneren Tragelemente aneinander sowie der inneren Tragelemente an dem Lagerbock und der äußeren Tragelemente an den Tragschuhen beliebig sein kann, wobei beispielsweise Schraub- oder insbesondere Schweißverbindungen vorgesehen sein können. Entsprechendes gilt für die Befestigung der Außenträger eines Außenträger aufweisenden äußeren Tragelementes an den Längsträger und an den Tragschuhen. Überdies ist es selbstverständlich denkbar, dass die äußeren und inneren Tragelemente einstückig gefertigt sind, was insbesondere im Falle einer Ausgestaltung der äußeren und inneren Tragelemente in Form von Wandteilen - bzw. in diesem Fall: eines einzigen Wandteils mit einem das äußere Wandteil bildenden Abschnitt und einem das innere Wandteil bildenden Abschnitt, welche winkelig zueinander angeordnet sind - sinnvoll sein kann.

Sofern die äußeren und/oder inneren Tragelemente Außen- bzw. Innenträger umfassen, können die Innenträger, die Außenträger und/oder der diese verbindende Längsträger zweckmäßigerweise eine im Wesentlichen lineare Erstreckung besitzen, wobei sie insbesondere im Wesentlichen stabförmig ausgebildet sein können. Entsprechend kann der Querträger unabhängig von der Ausgestaltung der äußeren und inneren Tragelemente vorzugsweise eine etwa lineare Erstreckung besitzen und seinerseits im Wesentlichen stabförmig ausgestaltet sein. Gleiches gilt für einen gegebenenfalls vorgesehenen weiteren Querträger, welcher sich zwischen den Tragschuhen bzw. zwischen den unteren Enden der beiden äußeren Tragelemente erstreckt.

Was die Erstreckungsrichtung eines jeweiligen äußeren Tragelementes betrifft, so kann in vorteilhafter Ausgestaltung vorgesehen sein, dass diese in Bezug auf die parallel zur Fahrtrichtung angeordnete Vertikalebene unter einem Winkel zwischen 0° und 45°, insbesondere zwischen 5° und 40°, vorzugsweise zwischen 10° und 35°, nach innen geneigt angeordnet ist, so dass die Gewichtskräfte des Vorratsbehälters über die äußeren Tragelemente etwa senkrecht oder insbesondere schräg nach außen und unten in die Tragschuhe und von dort in das hieran befestigte erste Bodenbearbeitungsgerät eingeleitet werden.

Was die Erstreckungsrichtung eines jeweiligen inneren Tragelementes angeht, so kann in vorteilhafter Ausgestaltung vorgesehen sein, dass ein jeweiliges inneres Tragelement in Bezug auf die auf dem Höhenniveau des Lagerbockes angeordnete Horizontalebene unter einem Winkel zwischen 10° und 55°, insbesondere zwischen 15° und 50°, vorzugsweise zwischen 20° und 45°, nach oben geneigt angeordnet ist. Die inneren Tragelemente erstrecken sich folglich bevorzugt von den entgegengesetzten Enden des Lagerbockes jeweils schräg nach oben und außen in Richtung der äußeren Tragelemente.

Um für eine sichere Abstützung des Vorratsbehälters zu sorgen, kann insbesondere vorgesehen sein, dass
- der Vorratsbehälter zumindest auf den beiden äußeren Tragelementen sowie auf dem wenigstens einen Querträger und gegebenenfalls auf den beiden inneren Tragelementen ruht; oder
- die beiden äußeren Tragelemente und/oder der wenigstens eine Querträger und/oder die beiden inneren Tragelemente zumindest teilweise von Rahmenteilen des Vorratsbehälters gebildet sind.

Im erstgenannten Fall kann die aus den beiden äußeren Tragelementen sowie dem diese miteinander verbindenden Querträger gebildete Anordnung einen Rahmen des Vorratsbehälter zweckmäßigerweise etwa U-förmig um- und/oder untergreifen, wobei selbstverständlich grundsätzlich auch weitere, den Vorratsbehälter abstützende Träger vorgesehen sein können, wie beispielsweise ein zweiter, etwa parallel zu dem Längsträger angeordneter Träger, so dass die Anordnung den Vorratsbehälters im Wesentlichen gänzlich um- bzw. untergreift. Darüber hinaus ist entsprechend dem letztgenannten Fall möglich, dass zumindest eines oder mehrere Teile der äußeren Tragelemente, wie beispielsweise die Längsträger von äußeren Tragelementen in Form von Außenträgern, und/oder der bzw. die Querträger sowie gegebenenfalls auch die inneren Tragelemente von Teilen des Rahmens des Vorratsbehälters gebildet sind, so dass der Rahmen des Vorratsbehälters praktisch in den Tragrahmen integriert und lediglich mit die Behälterwandungen bildenden Wandteilen verkleidet ist.

Um für eine ungehinderte Sicht des Benutzers nach hinten auf den mittels der Verteilmaschine bzw. deren Bodenbearbeitungsgeräte bearbeiteten Boden durch den erfindungsgemäßen Tragrahmen hindurch zu sorgen, kann vorzugsweise ein Antrieb der Fördermittel, wie beispielsweise ein Gebläse zur pneumatischen Überführung des mittels des Dosierorgans dosierten Streugutes über Verteilerleitungen an die Verteileinrichtungen, an wenigstens einem der äußeren Tragelemente, insbesondere im Wesentlichen parallel zu dessen Erstreckungsebene, festgelegt sein, wobei ein solcher Antrieb je nach Ausgestaltung der äußeren Tragelemente beispielsweise zwischen zumindest einem der Paare von Außenträgern in der von diesen aufgespannten Ebene oder parallel zu zumindest einem, einen jeweiligen Außenträger bildenden Wandteil angeordnet sein kann. Entsprechendes gilt zweckmäßig für weitere funktionale Teile der Verteilmaschine, wobei insbesondere auch die zu den Verteileinrichtungen hin führenden Verteilerleitungen seitlich des Vorratsbehälters geführt sein sollten.

Wie bereits angedeutet, stützt sich der Tragrahmen der Verteilmaschine während des Betriebs insbesondere auf dem an den Tragschuhen festgelegten ersten Bodenbearbeitungsgerät ab.

In bevorzugter Ausführung kann ferner vorgesehen sein, dass das erste Bodenbearbeitungsgerät lösbar, insbesondere mittels Schnellverschlüssen, an den Tragschuhen befestigbar ist. Dabei kann insbesondere ein Rahmen des ersten Bodenbearbeitungsgerätes an den Tragschuhen des Tragrahmens lösbar befestigt sein, so dass der Rahmen des ersten Bodenbearbeitungsgerätes einerseits als (untere) - alleinige oder zusätzliche - Querversteifung des Tragrahmens der Verteilmaschine während des Betriebs dient und das erste Bodenbearbeitungsgerät andererseits auch separat, nachdem es von dem Tragschuhen gelöst worden ist, zur Bodenbearbeitung genutzt werden kann.

In weiterhin bevorzugter Ausführung kann vorgesehen sein, dass ein jeder Tragschuh und/oder ein hieran befestigbarer Rahmen des ersten Bodenbearbeitungsgerätes mit wenigstens einem Lagerblock ausgestattet ist, welcher zur schwenkbaren Befestigung je eines Kopplungsträgers ausgebildet ist, wobei jeder Kopplungsträger an seinem einem jeweiligen Lagerblock abgewandten Ende zur schwenkbaren Befestigung an
- den beiden unteren Befestigungspunkten eines Dreipunkt-Krafthebers einer Zugmaschine und/oder
- zwei unteren Befestigungspunkten des zweiten Bodenbearbeitungsgerätes
ausgebildet ist.

Sofern die Verteilmaschine mit dem an ihren Tragschuhen festgelegten ersten Bodenbearbeitungsgerät demnach unmittelbar an dem Dreipunkt-Kraftheber der Zugmaschine, wie eines Traktors, festgelegt werden soll, dienen die Kopplungsträger zur Verbindung mit den beiden unteren Punkten des Dreipunkt-Krafthebers, während der Lagerbock mit dem hieran gelagerten Oberlenker zur Verbindung mit dem oberen Punkt des Dreipunkt-Krafthebers dient. Aufgrund der Schwenkbarkeit einerseits des Oberlenkers, andererseits der Kopplungsträger vermag die sich auf dem ersten Bodenbearbeitungsgerät abstützende Verteilmaschine Unebenheiten des Bodens unabhängig von der Zugmaschine zu folgen.

Sofern die Verteilmaschine hingegen mit einem zweiten Bodenbearbeitungsgerät bestückt werden soll, dienen die Kopplungsträger zur schwenkbaren Verbindung mit zwei unteren Befestigungspunkten des zweiten Bodenbearbeitungsgerätes, während der Lagerbock mit dem hieran gelagerten Oberlenker zur schwenkbaren Verbindung mit einem oberen Befestigungspunkt des zweiten Bodenbearbeitungsgerätes dient. Letzteres kann seinerseits auf herkömmliche Weise, insbesondere starr, mit dem Dreipunkt-Kraftheber der Zugmaschine verbunden werden, so dass das zweite Bodenbearbeitungsgerät praktisch der Zugmaschine und dem Tragrahmen der Verteilmaschine "zwischengeordnet" ist. Aufgrund der Schwenkbarkeit einerseits des Oberlenkers, andererseits der Kopplungsträger vermag die sich auf dem ersten Bodenbearbeitungsgerät abstützende Verteilmaschine auch in diesem Fall Unebenheiten des Bodens unabhängig von der Zugmaschine und dem zweiten Bodenbearbeitungsgerät zu folgen, wobei ferner auch das gewünschte Höhenniveau des zweiten Bodenbearbeitungsgerätes durch entsprechende Höhenverlagerung des Dreipunkt-Krafthebers der Zugmaschine beliebig einstellbar ist. Darüber hinaus kann die aus dem ersten und zweiten Bodenbearbeitungsgerät gebildete Einheit auch separat benutzt werden, wenn das erste Bodenbearbeitungsgerät auf die oben beschriebene Weise von den Tragschuhen des Tragrahmens der Verteilmaschine sowie die Verbindung zwischen dem Tragrahmen und dem zweiten Bodenbearbeitungsgerät mittels des an dem Lagerbock angelenkten Oberlenkers gelöst wird.

Den Kopplungsträgern ist überdies zweckmäßig ein Anschlag zugeordnet, welcher ihre Schwenkbarkeit begrenzt und somit ein Anheben der an dem Dreipunkt-Kraftheber der Zugmaschine - sei es direkt oder unter Zwischenanordnung des zweiten Bodenbearbeitungsgerätes - festgelegten Verteilmaschine ermöglicht, wenn der Dreipunkt-Kraftheber der Zugmaschine über ein bestimmtes Höhenniveau hinaus nach oben bewegt worden ist, um die Verteilmaschine zwischen einer angehobenen Transportposition und einer abgesenkten Arbeitsposition, in welcher sie sich insbesondere auf dem ersten Bodenbearbeitungsgerät abstützt, hin und her zu verlagern.

Darüber hinaus hat es sich als vorteilhaft erwiesen, wenn jeder Kopplungsträger lösbar, insbesondere mittels Schnellverschlüssen, einerseits an den Lagerblöcken, andererseits an
- den beiden unteren Befestigungspunkten des Dreipunkt-Krafthebers einer Zugmaschine und/oder
- zwei unteren Befestigungspunkten des zweiten Bodenbearbeitungsgerätes
befestigbar ist, um für ein einfaches und schnelles Verbinden/Lösen der Verteilmaschine und/oder des an deren Tragschuhen festgelegten ersten Bodenbearbeitungsgerätes mit/von dem zweiten Bodenbearbeitungsgerät bzw. mit/von dem Dreipunkt-Kraftheber der Zugmaschine zu sorgen.

Während als Bodenbearbeitungsgeräte grundsätzlich beliebige Geräte zum Einsatz kommen können, kann es sich insbesondere dann, wenn die Verteilmaschine nach Art einer Sä- oder Drillmaschine ausgestaltet ist,
- bei dem ersten Bodenbearbeitungsgerät um eine Packerwalze und/oder
- bei dem zweiten Bodenbearbeitungsgerät um eine Kreiselegge
handeln. Die Verteilmaschine selbst kann dabei beispielsweise als Streu- oder Sämaschine ausgestaltet sein, wobei es sich hierbei insbesondere, wenn auch nicht ausschließlich, um eine pneumatische Sämaschine handeln kann, deren Antrieb der Fördermittel wenigstens ein Gebläse umfasst.

Weitere Merkmale und Vorteile der Erfindung ergeben sich aus der nachfolgenden Beschreibung unter Bezugnahme auf die Zeichnungen. Dabei zeigen:
- Fig. 1: eine schematische Seitenansicht einer Ausführungsform einer erfindungsgemäßen Verteilmaschine in Form einer Sämaschine, welche an dem Dreipunkt-Kraftheber einer abgebrochen dargestellten Zugmaschine festgelegt ist;
- Fig. 2: eine schematische perspektivische Ansicht einer ersten Ausführungsvariante des Tragrahmens der Verteilmaschine gemäß Fig. 1 mit hieran befestigtem Vorratsbehälter;
- Fig. 3: eine schematische perspektivische Ansicht des Tragrahmens und des Vorratsbehälters gemäß Fig. 2 in Explosionsdarstellung;
- Fig. 4: eine schematische Detailansicht des Tragrahmens gemäß Fig. 2 und 3 von - in Fahrtrichtung betrachtet - vorne;
- Fig. 5: eine schematische perspektivische Detailansicht des Tragrahmens gemäß Fig. 2 bis 4 von - in Fahrtrichtung betrachtet - schräg hinten;
- Fig. 6: eine schematische perspektivische Detailansicht des Tragrahmens gemäß Fig. 2 bis 5 von - in Fahrtrichtung betrachtet - schräg vorne;
- Fig. 7: eine schematische Detailansicht des Tragrahmens gemäß Fig. 2 bis 6 von der Seite;
- Fig. 8: eine schematische Detailansicht des Tragrahmens gemäß Fig. 2 bis 7 von oben;
- Fig. 9: eine der Fig. 5 ähnliche, schematische perspektivische Detailansicht einer zweiten Ausführungsform des Tragrahmens der Verteilmaschine gemäß Fig. 1 von - in Fahrtrichtung betrachtet - schräg hinten; und
- Fig. 10: eine der Fig. 6 ähnliche, schematische perspektivische Detailansicht des Tragrahmens gemäß Fig. 9 von - in Fahrtrichtung betrachtet - schräg vorne.

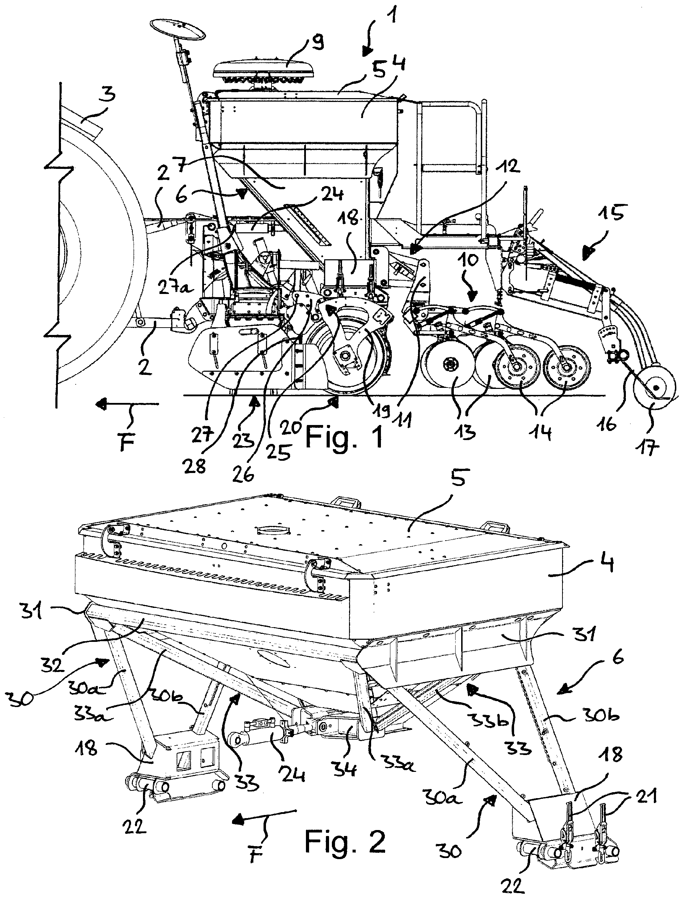

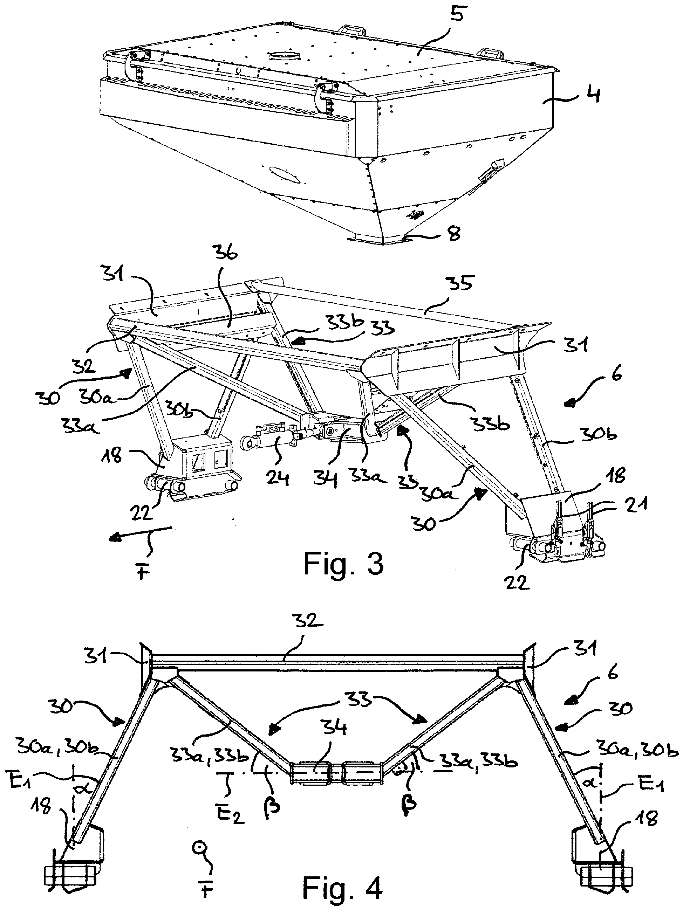

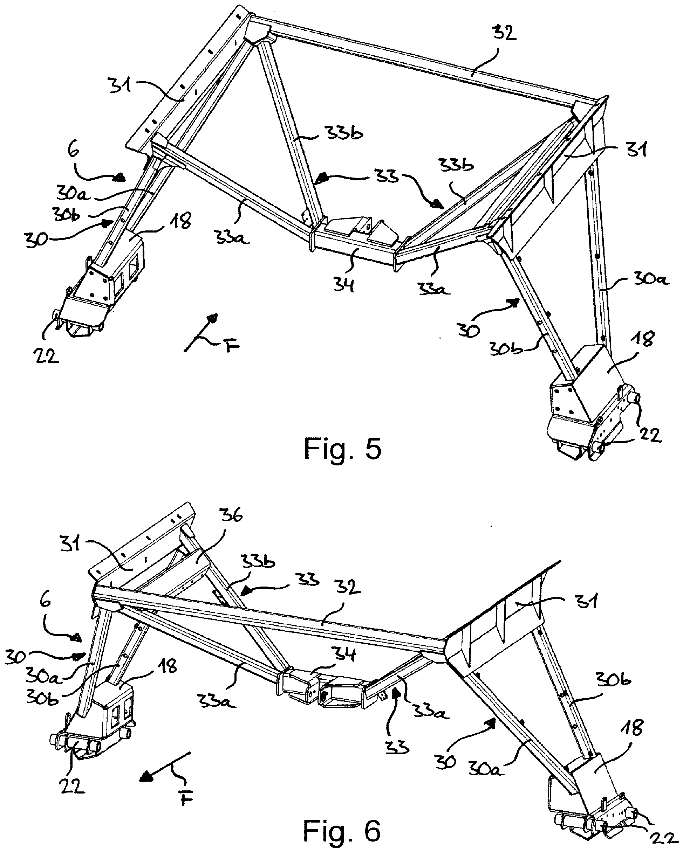

In Fig. 1 ist eine insgesamt mit dem Bezugszeichen 1 versehene Verteilmaschine schematisch wiedergegeben, welche beim vorliegenden Ausführungsbeispiel von einer pneumatischen Sämaschine gebildet und an den Dreipunkt-Kraftheber 2 am Heck einer abgebrochen dargestellten Zugmaschine 3, wie eines Traktors, angekoppelt ist. Die Verteilmaschine 1 umfasst einen Vorratsbehälter 4 zur Aufnahme von Streugut, wie z.B. Dünger oder insbesondere Saatgut, mit einer Abdeckung 5, welcher von einem insgesamt mit dem Bezugszeichen 6 versehenen Tragrahmen gemäß einer ersten Ausführungsvariante getragen ist, wie er weiter unten unter Bezugnahme auf die Fig. 2 bis 8 im Einzelnen erläutert ist. An dem Tragrahmen 6 - oder genauer: zwischen zwei Außenträgern desselben - ist ferner ein Gebläse 7 zur Erzeugung eines Luftstroms festgelegt. Unterhalb einer - nur in Fig. 3 erkennbaren - Auslauföffnung 8 des etwa trichterförmig nach unten zulaufenden Vorratsbehälters 4 befindet sich ein Dosierorgan (nicht zeichnerisch erkennbar) herkömmlicher Bauart, welchem eine gleichfalls zeichnerisch nicht erkennbare Übergabeeinrichtung nachgeordnet ist. Letztere dient zur Überführung des Streugutes an eine Förderleitung (nicht erkennbar), welche von dem Gebläse 7 mit einem Luftstrom beaufschlagt ist, um das Streugut nach oben in einen Verteilerkopf 9 zu fördern. Der Verteilerkopf 9 umfasst eine Mehrzahl an um seinen Umfang verteilt angeordneten Anschlüssen, an welche je eine Verteilerleitung (nicht gezeigt) angeschlossen ist. Jede Verteilerleitung ist im Wesentlichen zur Seite sowie nach unten und hinten geführt und führt an ihrem freien, dem Verteilerkopf 9 abgewandten Ende zu je einem Verteilorgan 10.

Im Falle der in Fig. 1 exemplarisch gezeigten Sämaschine 1 handelt es sich bei den Verteilorganen 10 um Säscharen, von welchen in Fig. 1 exemplarisch nur zwei dargestellt und welche beispielsweise in Form von Scheibenscharen ausgebildet sind und in als solcher bekannter Weise ein Traggestänge 11 aufweisen, welches mittels einer geeigneten Befestigungseinrichtung 12 lösbar an dem Tragrahmen 6 der Sämaschine 1 festlegbar ist. Jede Säschar 10 umfasst beim vorliegenden Ausführungsbeispiel eine Scharscheibe 13 sowie eine dieser nachgeordnete Andruckrolle 14, welche sich - in Fahrtrichtung F der Sämaschine 1 betrachtet - etwa in Flucht mit der Scharscheibe 13 befindet. Den Säscharen 10 ist darüber hinaus eine Zustreichvorrichtung 15 nachgeordnet, welche eine Mehrzahl an Zustreichwerkzeugen 16 - die sogenannten Striegel - umfasst. Ferner kann z.B. ein Vorauflaufmarkierer 17 vorgesehen sein.

An zwei unteren, unter - senkrecht zur Fahrtrichtung F betrachtet - seitlichem Abstand voneinander und an der Unterseite der ersten Ausführungsvariante des Tragrahmens 6 angeordneten Tragschuhen 18 ist der Rahmen 19 eines ersten Bodenbearbeitungsgerätes 20 - hier: in Form einer Packerwalze - lösbar festgelegt. Dies kann insbesondere mittels Schnellverschlüssen 21 geschehen, welche mit - im vorliegenden Fall etwa bolzenförmigen - Anschlag-/Positionierungselementen 22 eines jeden Tragschuhs 18 zusammenwirken (vgl. insbesondere auch Fig. 2 und 3), welche in entsprechende Aufnahmeschalen (nicht gezeigt) des ersten Bodenbearbeitungsgerätes 20 einbringbar sind, um letzteres mittels den klammerartigen Schnellverschlüssen 21 an den Tragschuhen 18 lösbar festlegen zu können. Während des in Fig. 1 dargestellten Betriebs stützt sich der Tragrahmen 6 der Verteilmaschine 1 auf diese Weise auf dem ersten Bodenbearbeitungsgerät 20 auf.

Während die Verteilmaschine 1 mit dem ersten Bodenbearbeitungsgerät 20 grundsätzlich auch direkt an dem Dreipunkt-Kraftheber 2 der Zugmaschine 3 lösbar befestigt werden kann, ist die Verteilmaschine 1 beim vorliegenden Ausführungsbeispiel mit einem zweiten Bodenbearbeitungsgerät 23 - hier: in Form einer Kreiselegge - bestückt, welches an ihrer in Fahrtrichtung F betrachtet vorderen, der Zugmaschine 3 zugewandten Seite angekoppelt und in herkömmlicher Weise an dem Dreipunkt-Kraftheber 2 der Zugmaschine 3 befestigt ist. Dabei ist das als Kreiselegge ausgebildete zweite Bodenbearbeitungsgerät 23 ferner an die Zapfwelle der Zugmaschine 3 angeschlossen (nicht dargestellt), um die Zinken der Kreiselegge während des Betriebs in Rotation zu versetzen.

Wie aus Fig. 1 ersichtlich, erfolgt die Ankopplung des zweiten Bodenbearbeitungsgerätes 23 an den Tragrahmen 6 der Verteilmaschine 1 wie folgt: Zum Einen ist das zweite Bodenbearbeitungsgerät 23 an einem zentralen und im oberen Bereich desselben angeordneten Befestigungspunkt 27a mittels eines hieran angelenkten Oberlenkers 24 schwenk- und lösbar mit einem Lagerbock 34 (vgl. insbesondere Fig. 2 und 3) des Tragrahmens 6 verbunden, welcher weiter unten unter Bezugnahme auf die Fig. 2 bis 8 näher beschrieben ist. Der nach Art einer Lenkerstange ausgebildete Oberlenker 24 ist dabei in seiner Länge verstellbar, um die Neigung der Verteilmaschine 1 einstellen und diese insbesondere waagrecht justieren zu können. Zum Anderen weist ein jeder Tragschuh 18 des Tragrahmens 6 der Verteilmaschine 1 oder, wie es beim vorliegenden Ausführungsbeispiel der Fall ist, der hieran lösbar festgelegte Rahmen 19 des ersten Bodenbearbeitungsgerätes 20 im Bereich seiner - senkrecht zur Fahrtrichtung F betrachtet - entgegengesetzten Enden je einen Lagerblock 25 auf, an welchem je ein Kopplungsträger 26 schwenkbar befestigt ist, welcher an seinem dem jeweiligen Lagerblock 25 des ersten Bodenbearbeitungsgerätes abgewandten Ende an je einem unteren Befestigungspunkt 27 des zweiten Bodenbearbeitungsgerätes 23 lösbar angelenkt ist.

Auf diese Weise ist es möglich, das gewünschte Höhenniveau des zweiten Bodenbearbeitungsgerätes 23 durch entsprechende Höhenverlagerung des Dreipunkt-Krafthebers 2 einzustellen, wobei die sich auf dem ersten Bodenbearbeitungsgerät 20 abstützende Verteilmaschine 1 Unebenheiten des Bodens zu folgen vermag, ohne dass das Höhenniveau des zweiten Bodenbearbeitungsgerätes 23 verändert wird oder umgekehrt. Darüber hinaus ist es möglich, das zweite Bodenbearbeitungsgerät 23 oder die aus den auf die obige Weise aneinander gekoppelten ersten 20 und zweiten Bodenbearbeitungsgeräte 23 gebildete Einheit auch ohne die eigentliche Verteilmaschine 1 zu benutzen, indem der Tragrahmen 6 der Verteilmaschine 1, z.B. mittels eines Staplers, angehoben und einerseits die Verteilmaschine 1 durch Öffnen der Schnellverschlüsse 21 und Ausbringen der Anschlag-/Positionierungselemente 22 aus den zugehörigen Aufnahmen des ersten Bodenbearbeitungsgerätes 20 von dem ersten Bodenbearbeitungsgerät 20 gelöst wird, andererseits das zweite Bodenbearbeitungsgerät 23 durch Trennen des Oberlenkers 24 von dem Tragrahmen 6 und/oder von dem oberen Befestigungspunkt 27a des zweiten Bodenbearbeitungsgerätes 23 gelöst wird.

Um die unter Zwischenanordnung des zweiten Bodenbearbeitungsgerätes 23 an den Dreipunkt-Kraftheber 2 der Zugmaschine 3 angekoppelte Verteilmaschine 1 zwischen der in Fig. 1 wiedergegebenen Betriebsposition und einer angehobenen Transportposition (nicht gezeigt) hin und her verlagern zu können, ist jedem Kopplungsträger 26 ein unterhalb desselben positionierter Anschlag 28 zugeordnet, welcher im vorliegenden Fall z.B. von einander zugewandten Widerlagerflächen einerseits des Rahmens 19 des ersten Bodenbearbeitungsgerätes 20, andererseits des Rahmens des zweiten Bodenbearbeitungsgerätes 23 gebildet ist. Wird das zweite Bodenbearbeitungsgerät 23 mittels des Dreipunkt-Krafthebers 2 auf ein Höhenniveau deutlich oberhalb der in Fig. 1 dargestellten Situation angehoben, so gelangen die Widerlagerflächen des Anschlags 28 miteinander in Stützkontakt und begrenzen auf diese Weise die Schwenkbarkeit der Kopplungsträger 26 einerseits um den Lagerblock 25 des Rahmens 19 des ersten Bodenbearbeitungsgerätes 20, andererseits an dem unteren Befestigungspunkt 27 des zweiten Bodenbearbeitungsgerätes 23, so dass die Verteilmaschine angehoben und abgesenkt werden kann.

Nachfolgend ist die erste Ausführungsvariante des Tragrahmens 6 der Verteilmaschine unter Bezugnahme auf die Fig. 2 bis 8 im Einzelnen erläutert.

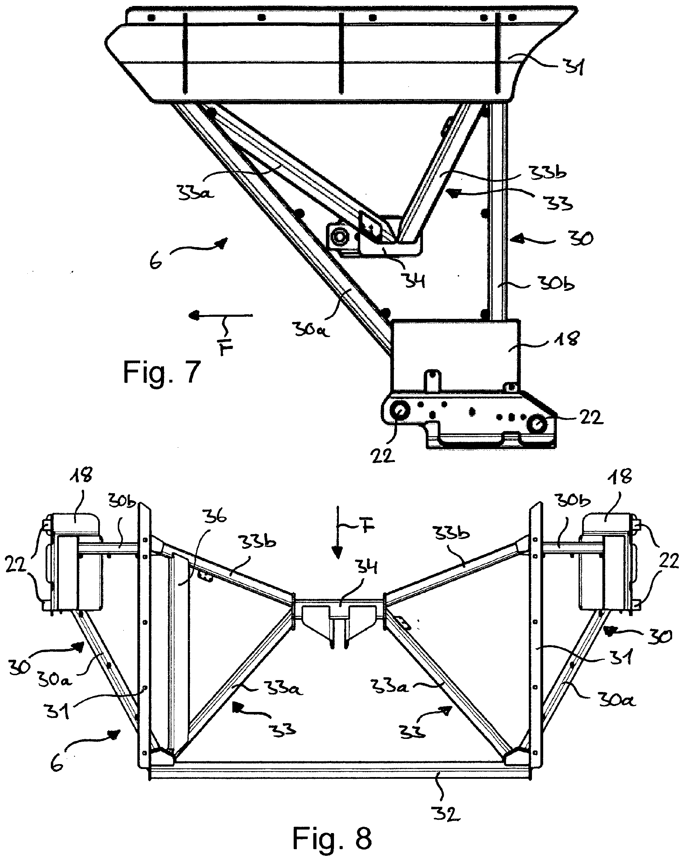

Wie aus den Fig. 2 bis 8 ersichtlich, bietet die erfindungsgemäße Ausgestaltung des Tragrahmens 6 den Vorteil, dass der Bauraum unterhalb des Lagerbockes 34 mit dem Oberlenker 24 und zwischen den beiden Tragschuhen 18 frei bleibt, d.h. es sind dort keinerlei Vertikalträger oder andere Bestandteile des Tragrahmens 6 angeordnet, welche die Sicht nach hinten durch den Tragrahmen 6 hindurch beeinträchtigen könnten. Der Tragrahmen 6 ist entsprechend der vorliegenden ersten Ausführungsvariante nach Art eines stabilen und verwindungssteifen Stabwerks aufgebaut, welches den Vorratsbehälter 4 trägt und an dessen Unterseite die beiden Tragschuhe 18 zur lösbaren Befestigung des Rahmens 19 des ersten Bodenbearbeitungsgerätes 20 unter seitlichem Abstand voneinander angeordnet sind. Dabei ist ein jeder Tragschuh 18 am unteren Ende je eines äußeren Tragelementes 30 festgelegt, welches im vorliegenden Fall zwei sich im Wesentlichen linear nach innen und oben erstreckende Außenträger 30a, 30b umfasst, welche im Bereich ihres dem Tragschuh 18 entgegengesetzten, oberen Endes mittels je eines Längsträgers 31 miteinander verbunden sind, welcher sich im Wesentlichen linear und horizontal parallel zur Fahrtrichtung F erstreckt, so dass die beiden Außenträger 30a, 30b und der sie verbindende Längsträger 31 eines jeden äußeren Tragelementes 30 jeweils etwa ein Dreieck bilden, an dessen unterem Eck der jeweilige Tragschuh 18 positioniert ist. Die beiden Außenträger 30a, 30b divergieren hierbei etwa V-förmig von einem jeden Tragschuh 18 fort und sind in einer Ebene angeordnet, welche in Bezug auf eine parallel zur Fahrtrichtung angeordneten Vertikalebene E₁ unter einem Winkel α von etwa 25° nach innen geneigt ist (vgl. Fig. 4). Wie insbesondere der Fig. 7 zu entnehmen ist, weisen beim vorliegenden Ausführungsbeispiel die in Fahrtrichtung F vorderen Außenträger 30a ferner eine Erstreckungsrichtungskomponente in Fahrtrichtung, d.h. schräg nach vorne, auf, während die in Fahrtrichtung F hinteren Außenträger 30b sich z.B. von einem Tragschuh 18 fort ausschließlich nach innen und oben erstrecken. Indes ist es selbstverständlich auch möglich, dass auch die in Fahrtrichtung hinteren Außenträger 30b eine parallel zur Fahrtrichtung gerichtete Erstreckungsrichtungskomponente, insbesondere schräg nach hinten, besitzen oder jeweils ein Paar von Außenträgern 30a, 30b kann beispielsweise auch parallel zueinander angeordnet sein und sich z.B. ausschließlich nach oben und innen erstrecken, ohne eine parallel zur Fahrtrichtung gerichtete Erstreckungsrichtungskomponente aufzuweisen (jeweils nicht gezeigt).

Im Bereich der Verbindungsstelle je eines der Außenträger 30a, 30b eines jeweiligen äußeren Tragelementes 30 - hier: der in Fahrtrichtung F vorderen Außenträger 30a - mit einem jeweiligen Längsträger 31 erstreckt sich etwa linear ein horizontal und senkrecht zur Fahrtrichtung F angeordneter Querträger 32, welcher das "Dreieck" aus den Außenträgern 30a, 30b und dem Längsträger 31 eines jeweiligen äußeren Tragelementes 30 etwa auf dem Höhenniveau der Längsträger 31 miteinander verbindet. Darüber hinaus sind die beiden Außenträger 30a, 30b eines jeweiligen äußeren Tragelementes 30 im Bereich ihrer jeweiligen Verbindungsstellen mit den Längsträgern 31 mittels je eines inneren Tragelementes 33 mit dem Lagerbock 34 verbunden, wobei jedes innere Tragelement 33 seinerseits zwei etwa linear verlaufende Innenträger 33a, 33b umfasst, welche sich jeweils etwa V-förmig von - senkrecht zur Fahrtrichtung F betrachtet - entgegengesetzten Enden des Lagerbockes 34 fort nach schräg oben und außen erstrecken. Beim vorliegenden Ausführungsbeispiel besitzen sowohl die in Fahrtrichtung F vorderen Innenträger 33a als auch die in Fahrtrichtung F hinteren Innenträger 33b eine parallel zur Fahrtrichtung angeordnete Erstreckungsrichtungskomponente, so dass der zur Anlenkung des Oberlenkers 24 (vgl. Fig. 1 bis 3) dienende Lagerbock 34 unterhalb des Öffnungsquerschnittes des Vorratsbehälters 4, aber oberhalb des Höhenniveaus der Tragschuhe 18 angeordnet ist. Jedes Paar von Innenträgern 33a, 33b der inneren Tragelemente 33 ist ferner in je einer Ebene angeordnet, welche jeweils in Bezug auf eine auf dem Höhenniveau des Lagerbockes 34 angeordnete Horizontalebene E₂ von den entgegengesetzten Enden des Lagerbockes 34 fort unter einem Winkel β von etwa 35° nach oben geneigt ist (vgl. Fig. 4).

Darüber hinaus können zur weiteren Versteifung des Tragrahmens 6 und/oder zum Zwecke eines Auflagers für den Vorratsbehälter 4 weitere Träger vorgesehen sein, wie beispielsweise ein sich etwa parallel zu dem Querträger 32 auf ähnlichem Höhenniveau erstreckender Querversteifungsträger 35 (nur in Fig. 3 gezeigt), welcher mit den beiden Längsträgern 31 und dem Querträger 32 im Wesentlichen ein Rechteck bildet, welches den Vorratsbehälter 4 sowohl unter- als auch umgreift (siehe Fig. 2). Ferner können beispielsweise auch weitere Längsversteifungsträger 36 vorgesehen sein, welche sich z.B. zwischen je einem oder beiden Paaren der Innenträger 33a, 33b erstrecken und auch zur Halterung weiterer Komponenten der Verteilmaschine 1, wie beispielsweise des Gebläses 7, dienen können. Der Vorratsbehälter 4 ruht in diesem Fall einerseits auf den beiden Längsträgern 31 eines jeweiligen äußeren Tragelementes 30, andererseits auf dem diese miteinander verbindenden Querträger 32 und dem Querversteifungsträger 35 sowie gegebenenfalls auf dem oder den Längsversteifungsträger(n) 36. Wie weiter oben erwähnt, können insbesondere die Längsträger 31, der Querträger 32 und/oder der Querversteifungsträger 35 stattdessen auch von Rahmenteilen des Behälters 4 selbst gebildet sein (nicht gezeigt), so dass der Behälterrahmen eines solchen Behälters einen Teil des Tragrahmens 6 darstellt bzw. in letzteren integriert ist.

Aufgrund des nach Art eines Stabwerkes aufgebauten Tragrahmens 6, welcher sich ausschließlich auf den beiden Tragschuhen 18 abstützt und in dem Bauraum zwischen den Tragschuhen 18 sowie unterhalb des Lagerbockes 34 keine weiteren Komponenten vorsieht, vermag der Landwirt, welcher die Zugmaschine 3 (Fig. 1) steuert, unterhalb des Vorratsbehälters 4 durch den Tragrahmen 6 hindurch die - hier in Form von Säscharen ausgebildeten - Verteilorgane 10 sowie insgesamt das Ergebnis der Bodenbearbeitung während des Betriebs zu beobachten, wobei der Tragrahmen 6 gleichwohl eine äußerst robuste Tragkonstruktion mit höchster Verwindungssteifigkeit darstellt, welche hohe Traglasten aufzunehmen vermag. Entsprechendes gilt für den - nicht zeichnerisch dargestellten - Fall, wenn die äußeren 30 und inneren Tragelemente 33 von Wandteilen gebildet sind, welche sich beispielsweise in entsprechenden Ebenen erstrecken können, wie sie einerseits von den Außenträgern 30a, 30b, andererseits von den Innenträgern 33a, 33b, aufgespannt sind.

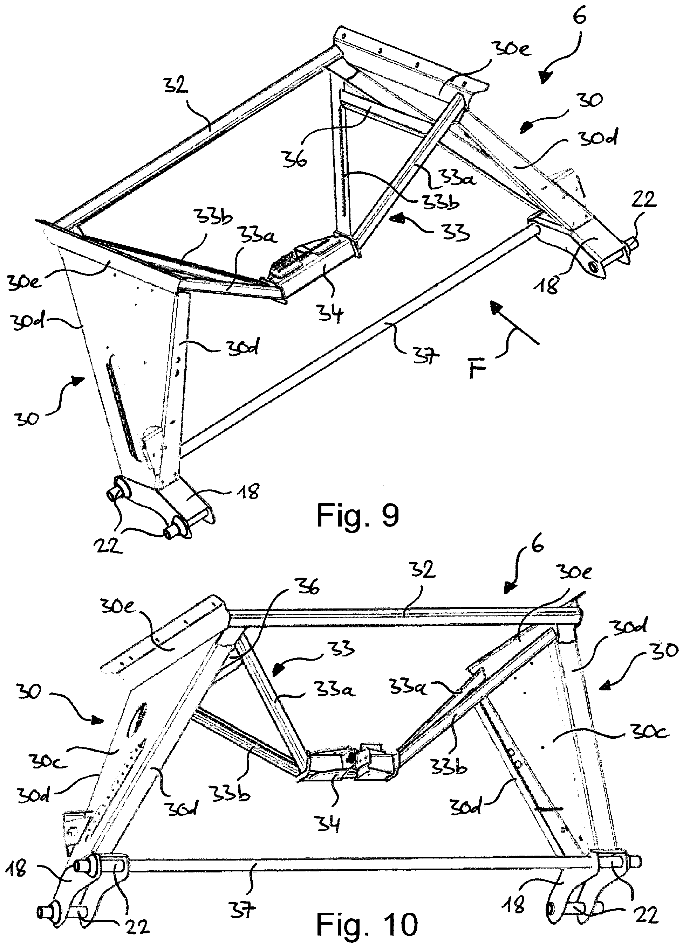

Bei der in Fig. 9 und 10 schematisch wiedergegebenen zweiten Ausführungsvariante eines erfindungsgemäßen Tragrahmens 6 sind identische bzw. wirkungsgleiche Komponenten mit denselben Bezugszeichen versehen und nicht nochmals näher erläutert. Die zweite Ausführungsvariante des Tragrahmens 6 unterscheidet sich jener gemäß Fig. 2 bis 8 vornehmlich einerseits dadurch, dass die äußeren Tragelemente 30 von im Wesentlichen flächigen, tragenden Wandteilen 30c gebildet sind, deren seitliche Ränder 30d von einem jeweiligen Tragschuh 18 fort im Wesentlichen V-förmig nach oben divergieren, so dass ein jeweiliges Wandteil 30c eine ähnliche, etwa dreieckige Gestalt besitzt wie die jeweils aus den Außenträgern 30a, 30b und dem Längsträger 31 gebildeten, stabförmigen äußeren Tragelemente 30 gemäß Fig. 2 bis 8. Gleichfalls kann ihr Neigungswinkel α etwa dem der Fig. 4 entsprechen. Die beispielsweise aus Blechmaterial gefertigten Wandteile 30c sind überdies aus Gründen einer sehr hohen Stabilität und Steifigkeit zumindest in den Richtungen höchster Last versteift, wobei die Versteifungen im vorliegenden Fall einerseits etwa U-profilförmige Umbiegungen bzw. Umfalzungen der seitlichen Ränder 30d, andererseits eine gleichfalls etwa U-förmige Umbiegung bzw. Umfalzung des oberen Randes (30e) nach außen umfassen. Der wenigstens eine, die äußeren Tragelemente 30 miteinander verbindende Querträger 32 verbindet die beiden Wandteile 30c in ihren jeweiligen Eckbereichen zwischen ihren einem seitlichen Rand 30d und ihrem oberen Rand 30e, an welchen sich auch die zur Versteifung dienenden Umbiegungen bzw. -falzungen befinden.

Andererseits unterscheidet sich die in den Fig. 9 und 10 dargestellte zweite Ausführungsvariante des Tragrahmens 6 von der ersten Ausführungsvariante gemäß Fig. 2 bis 8 dadurch, dass die an den unteren Enden der äußeren Tragelemente 30 festgelegten Tragschuhe 18 mittels eines weiteren, unteren Querträgers 37 miteinander verbunden sind, wobei sich der zur optimalen Versteifung des Tragrahmens 6 dienende untere Querträger 37 z.B. etwa stabförmig, horizontal und parallel zu dem an den Tragschuhen 18 befestigbaren Bodenbearbeitungsgerät 20 (siehe Fig. 1; in Fig. 9 und 10 nicht gezeigt) erstreckt. Die mit einem solchen Tragrahmen 6 erzielten erfindungsgemäßen Wirkungen entsprechen den oben in Verbindung mit der ersten Ausführungsvariante des Tragrahmens 6 gemäß Fig. 2 bis 8 erläuterten vorteilhaften Wirkungen.

## Patentansprüche

1. Landwirtschaftliche Verteilmaschine (1), insbesondere Sämaschine, mit einem von einem Tragrahmen (6) getragenen Vorratsbehälter (4) zur Aufnahme von Streugut, wenigstens einem einer Auslauföffnung (8) des Vorratsbehälters (4) nachgeordneten Dosierorgan sowie Fördermitteln, welche zur Förderung des dosierten Streugutes an eine Mehrzahl von Verteileinrichtungen (10) ausgebildet sind, wobei der Tragrahmen (6) einerseits zwei jeweils an dessen Unterseite und unter seitlichem Abstand voneinander angeordnete Tragschuhe (18) aufweist, welche zur Befestigung eines ersten Bodenbearbeitungsgerätes (20) ausgebildet sind, und wobei der Tragrahmen (6) andererseits einen, insbesondere unter im Wesentlichen gleichem Seitenabstand von den Tragschuhen (18) angeordneten, Lagerbock (34) aufweist, welcher zur Lagerung eines Oberlenkers (24) zur lösbaren Befestigung des Tragrahmens (6) an einem zweiten Bodenbearbeitungsgerät (23) oder an einer Zugmaschine (3) ausgebildet ist, wobei
- jeder Tragschuh (18) am unteren Ende von wenigstens einem äußeren Tragelement (30) festgelegt ist, welches sich von dem jeweiligen Tragschuh (18) fort mit einer vertikalen Erstreckungsrichtungskomponente nach oben erstreckt und in Bezug auf eine parallel zur Fahrtrichtung (F) angeordnete Vertikalebene (E₁) unter einem Winkel (α) zwischen - 10° und 60° nach innen geneigt ist;
- ein jedes äußeres Tragelement (30) eines jeweiligen Tragschuhs (18) im Bereich seines oberen, dem jeweiligen Tragschuh (18) fernen Endes mit wenigstens einem inneren Tragelement (33) verbunden ist; und
- die äußeren Tragelemente (30) mittels wenigstens eines oberhalb des Niveaus des Lagerbockes (34) angeordneten Querträgers (32) miteinander verbunden sind.
**dadurch gekennzeichnet, dass** ein jedes äußeres Tragelement (30) mittels des wenigstens einen inneren Tragelementes (33) mit dem Lagerbock (34) verbunden ist, wobei sich das innere Tragelement (33) jeweils von dem jeweiligen äußeren Tragelement (30) fort mit einer horizontalen Erstreckungsrichtungskomponente nach innen erstreckt und in Bezug auf eine auf dem Höhenniveau des Lagerbockes (34) angeordnete Horizontalebene (E₂) unter einem Winkel (β) größer 0° und kleiner 90° nach oben geneigt ist, wobei jegliche Abstützung des Vorratsbehälters (1) auf unterhalb des Lagerbockes (34) und zwischen den beiden Tragschuhen (18) angeordneten Tragelementen vermieden ist.

2. Verteilmaschine nach Anspruch 1, **dadurch gekennzeichnet, dass** sich die äußeren Tragelemente (30) und/oder die inneren Tragelemente (33) im Wesentlichen in je einer Ebene erstrecken, welche insbesondere parallel zur Fahrtrichtung (F) angeordnet ist.

3. Verteilmaschine nach Anspruch 1 oder 2, **dadurch gekennzeichnet, dass** ein jeweiliges äußeres Tragelement (30)
- je wenigstens ein tragendes Wandteil (30c) umfasst, dessen seitliche Ränder (30d) insbesondere von einem jeweiligen Tragschuh (18) fort im Wesentlichen V-förmig nach oben divergieren; oder
- je wenigstens zwei Außenträger (30a, 30b) umfasst, welche im Bereich ihres dem Tragschuh (18) fernen, oberen Endes mittels wenigstens eines Längsträgers (31) miteinander verbunden sind, wobei die wenigstens zwei Außenträger (30a, 30b) insbesondere im Wesentlichen V-förmig von einem jeden Tragschuh (18) fort nach oben divergieren.

4. Verteilmaschine nach Anspruch 3, **dadurch gekennzeichnet, dass** ein jeweiliges äußeres Tragelement (30)
- je wenigstens ein tragendes Wandteil (30c) umfasst, und dass sich der wenigstens eine, die äußeren Tragelemente (30) miteinander verbindende Querträger (32) zwischen je einem seitlichen Rand (30d) oder einem oberen Rand (30e) eines jeweiligen äußeren Tragelementes (30), insbesondere zwischen je zwei Eckbereichen des äußeren Tragelementes (30) zwischen seinem seitlichen Rand (30d) und seinem oberen Rand (30e), erstreckt; oder
- je wenigstens zwei Außenträger (30a, 30b) umfasst, welche im Bereich ihres dem Tragschuh (18) fernen, oberen Endes mittels des wenigstens einen Längsträgers (31) miteinander verbunden sind, und dass sich der wenigstens eine, die äußeren Tragelemente (30) miteinander verbindende Querträger (32) zwischen je einem Außenträger (30a) eines jeweiligen äußeren Tragelementes (30) oder zwischen den die jeweiligen Außenträger (30a, 30b) miteinander verbindenden Längsträgern (31) erstreckt.

5. Verteilmaschine nach einem der Ansprüche 1 bis 4, **dadurch gekennzeichnet, dass** ein jeweiliges inneres Tragelement (33)
- je wenigstens ein tragendes Wandteil umfasst, dessen seitliche Ränder insbesondere von - senkrecht zur Fahrtrichtung (F) - entgegengesetzten Enden des Lagerbockes (34) fort im Wesentlichen V-förmig in Richtung des jeweiligen äußeren Tragelementes (30) divergieren; oder
- je wenigstens zwei Innenträger (33a, 33b) umfasst, welche insbesondere im Wesentlichen V-förmig von - senkrecht zur Fahrtrichtung (F) - entgegengesetzten Enden des Lagerbockes (34) fort in Richtung des jeweiligen äußeren Tragelementes (30) divergieren.

6. Verteilmaschine nach einem der Ansprüche 3 bis 5, **dadurch gekennzeichnet, dass** die Außenträger (30a, 30b), die Innenträger (33a, 33b), die Längsträger (31) und/oder der wenigstens eine Querträger (32) eine vornehmlich lineare Erstreckung besitzen, wobei sie insbesondere im Wesentlichen stabförmig ausgebildet sind.

7. Verteilmaschine nach einem der Ansprüche 1 bis 6, **dadurch gekennzeichnet, dass**
- ein jeweiliges äußeres Tragelement (30) in Bezug auf die parallel zur Fahrtrichtung (F) angeordnete Vertikalebene (E₁) unter einem Winkel (α) zwischen 0° und 45°, insbesondere zwischen 5° und 40°, vorzugsweise zwischen 10° und 35°, nach innen geneigt; und/oder
- ein jeweiliges inneres Tragelement (33) in Bezug auf die auf dem Höhenniveau des Lagerbockes (34) angeordnete Horizontalebene (E₂) unter einem Winkel (β) zwischen 10° und 55°, insbesondere zwischen 15° und 50°, vorzugsweise zwischen 20° und 45°, nach oben geneigt angeordnet ist.

8. Verteilmaschine nach einem der Ansprüche 1 bis 7, **dadurch gekennzeichnet, dass**
- der Vorratsbehälter (6) zumindest auf den beiden äußeren Tragelementen (30) sowie auf dem wenigstens einen Querträger (32) und gegebenenfalls auf den beiden inneren Tragelementen (33) ruht; oder
- die beiden äußeren Tragelemente (30) und/oder der wenigstens eine Querträger (32) und/oder die beiden inneren Tragelemente (33) zumindest teilweise von Rahmenteilen des Vorratsbehälters (7) gebildet sind.

9. Verteilmaschine nach einem der Ansprüche 1 bis 8, **dadurch gekennzeichnet, dass** ein Antrieb (7) der Fördermittel an wenigstens einem der äußeren Tragelemente (30), insbesondere parallel zu dessen Erstreckungsebene, festgelegt ist.

10. Verteilmaschine nach einem der Ansprüche 1 bis 9, **dadurch gekennzeichnet, dass** sich ihr Tragrahmen (6) während des Betriebs auf dem an den Tragschuhen (18) festgelegten ersten Bodenbearbeitungsgerät (20) abstützt.

11. Verteilmaschine nach einem der Ansprüche 1 bis 10, **dadurch gekennzeichnet, dass** das erste Bodenbearbeitungsgerät (20) lösbar, insbesondere mittels Schnellverschlüssen (21), an den Tragschuhen (18) befestigbar ist.

12. Verteilmaschine nach einem der Ansprüche 1 bis 11, **dadurch gekennzeichnet, dass** ein jeder Tragschuh (18) und/oder ein hieran befestigbarer Rahmen (19) des ersten Bodenbearbeitungsgerätes (20) mit wenigstens einem Lagerblock (25) ausgestattet ist, welcher zur schwenkbaren Befestigung je eines Kopplungsträgers (26) ausgebildet ist, wobei jeder Kopplungsträger (26) an seinem einem jeweiligen Lagerblock (25) abgewandten Ende zur schwenkbaren Befestigung an
- den beiden unteren Befestigungspunkten eines Dreipunkt-Krafthebers (2) einer Zugmaschine (3) und/oder
- zwei unteren Befestigungspunkten (27) des zweiten Bodenbearbeitungsgerätes (23)
ausgebildet ist.

13. Verteilmaschine nach Anspruch 12, **dadurch gekennzeichnet, dass** den Kopplungsträgern (26) ein Anschlag (28) zugeordnet ist, welcher ihre Schwenkbarkeit begrenzt und somit ein Anheben der an dem Dreipunkt-Kraftheber (2) der Zugmaschine (3) festgelegten Verteilmaschine (1) ermöglicht.

14. Verteilmaschine nach Anspruch 12 oder 13, **dadurch gekennzeichnet, dass** jeder Kopplungsträger (26) lösbar, insbesondere mittels Schnellverschlüssen, einerseits an den Lagerblöcken (25), andererseits an
- den beiden unteren Befestigungspunkten des Dreipunkt-Krafthebers (2) einer Zugmaschine (3) und/oder
- zwei unteren Befestigungspunkten (27) des zweiten Bodenbearbeitungsgerätes (23)
befestigbar ist.

15. Verteilmaschine nach einem der Ansprüche 1 bis 14, **dadurch gekennzeichnet, dass** es sich
- bei dem ersten Bodenbearbeitungsgerät (20) um eine Packerwalze und/oder
- bei dem zweiten Bodenbearbeitungsgerät (23) um eine Kreiselegge
handelt.

## Claims

1. Agricultural distributor (1), in particular seeder, with a storage container (4), which is supported by a supporting frame (6), for accommodating spreading material, at least one metering member arranged downstream of an outlet opening (8) of the storage container (4), and also conveying means which are designed for conveying the metered spreading material to a plurality of distributing devices (10), wherein the supporting frame (6) firstly has two supporting shoes (18) which are each arranged on the lower side of said supporting frame and at lateral distance from each other and which are designed for the fastening of a first soil cultivation implement (20), and wherein the supporting frame (6) secondly has a bearing bracket (34) which is arranged in particular at a substantially identical lateral distance from the supporting shoes (18) and is designed for the mounting of an upper link (24) for the releasable fastening of the supporting frame (6) to a second soil cultivation implement (23) or to a tractor (3), wherein
- each supporting shoe (18) is secured at the lower end by at least one outer supporting element (30) which extends away from the respective supporting shoe (18) upwards with a vertical direction of extent component and is inwardly inclined at an angle (α) of between -10° and 60° with respect to a vertical plane (E₁) arranged parallel to the direction of travel (F);
- each outer supporting element (30) of a respective supporting shoe (18) is connected in the region of its upper end remote from the respective supporting shoe (18) to at least one inner supporting element (33); and
- the outer supporting elements (30) are connected to one another by means of at least one crossmember (32) arranged above the level of the bearing bracket (34),
**characterized in that** each outer supporting element (30) is connected to the bearing bracket (34) by means of the at least one inner supporting element (33), wherein the inner supporting element (33) in each case extends away from the respective outer supporting element (30) inwards with a horizontal direction of extent component and is inclined at an angle (β) of greater than 0° and less than 90° with respect to a horizontal plane (E₂) arranged level with the bearing bracket (34), wherein any support of the storage container (1) on supporting elements arranged below the bearing bracket (34) and between the two supporting shoes (18) is avoided.

2. Distributor according to Claim 1, **characterized in that** the outer supporting elements (30) and/or the inner supporting elements (33) extend substantially in one plane each which is arranged in particular parallel to the direction of travel (F).

3. Distributor according to Claim 1 or 2, **characterized in that** a respective outer supporting element (30)
- in each case comprises at least one supporting wall part (30c), the lateral edges (30d) of which in particular diverge away from a respective supporting shoe (18) upwards in a substantially V-shaped manner; or
- in each case comprises at least two outer supports (30a, 30b) which are connected to each other in the region of their upper end remote from the supporting shoe (18) by means of at least one longitudinal member (31), wherein the at least two outer supports (30a, 30b) in particular diverge away from each supporting shoe (18) upwards in a substantially V-shaped manner.

4. Distributor according to Claim 3, **characterized in that** a respective outer supporting element (30)
- in each case comprises at least one supporting wall part (30c), and **in that** the at least one crossmember (32) connecting the outer supporting elements (30) to each other extends between in each case a lateral edge (30d) or an upper edge (30d) of a respective outer supporting element (30), in particular between in each case two corner regions of the outer supporting element (30) between its lateral edge (30d) and its upper edge (30e); or
- in each case comprises at least two outer supports (30a, 30b) which are connected to each other in the region of their upper end remote from the supporting shoe (18) by means of the at least one longitudinal member (31), and **in that** the at least one crossmember (32) connecting the outer supporting elements (30) to each other extends between in each case an outer support (30a) of a respective outer supporting element (30) or between the longitudinal members (31) connecting the respective outer supports (30a, 30b) to each other.

5. Distributor according to any of Claims 1 to 4, **characterized in that** a respective inner supporting element (33)
- in each case comprises at least one supporting wall part, the lateral edges of which diverge in particular away from opposite ends - perpendicularly to the direction of travel (F) - of the bearing bracket (34) in a substantially V-shaped manner in the direction of the respective outer supporting element (30); or
- in each case comprises at least two inner supports (33a, 33b) which diverge away in particular in a substantially V-shaped manner from opposite ends - perpendicularly to the direction of travel (F) - of the bearing bracket (34) in the direction of the respective outer supporting element (30).

6. Distributor according to one of Claims 3 to 5, **characterized in that** the outer supports (30a, 30b), the inner supports (33a, 33b), the longitudinal members (31) and/or the at least one crossmember (32) have a primarily linear extent, wherein they are in particular designed in a substantially rod-shaped manner.

7. Distributor according to one of Claims 1 to 6, **characterized in that**
- a respective outer supporting element (30) is arranged inclined inwards at an angle (α) of between 0° and 45°, in particular between 5° and 40°, preferably between 10° and 35°, with respect to the vertical plane (E₁) arranged parallel to the direction of travel (F); and/or
- a respective inner supporting element (33) is arranged inclined upwards at an angle (β) of between 10° and 55°, in particular between 15° and 50°, preferably between 20° and 45°, with respect to the horizontal plane (E₂) arranged level with the bearing bracket (34).

8. Distributor according to one of Claims 1 to 7, **characterized in that**
- the storage container (6) rests at least on the two outer supporting elements (30) and on the at least one crossmember (32) and optionally on the two inner supporting elements (33); or
- the two outer supporting elements (30) and/or the at least one crossmember (32) and/or the two inner supporting elements (33) are at least partially formed by frame parts of the storage container (7).

9. Distributor according to one of Claims 1 to 8, **characterized in that** a drive (7) of the conveying means is fixed to at least one of the outer supporting elements (30), in particular parallel to the plane of extent thereof.

10. Distributor according to one of Claims 1 to 9, **characterized in that** the supporting frame (6) thereof is supported during operation on the first soil cultivation implement (20) which is fixed to the supporting shoes (18).

11. Distributor according to one of Claims 1 to 10, **characterized in that** the first soil cultivation implement (20) is fastenable releasably, in particular by means of rapid-action closures (21) to the supporting shoes (18).

12. Distributor according to one of Claims 1 to 11, **characterized in that** each supporting shoe (18) and/or a frame (19) of the first soil cultivation implement (20), which frame is fastenable to said supporting shoe, is equipped with at least one bearing bracket (25) which is designed for pivotable fastening of one coupling support (26) each, wherein each coupling support (26) is designed at its end facing away from a respective bearing bracket (25) for the pivotable fastening to
- the two lower fastening points of a three-point power lifter (2) of a tractor (3), and/or
- two lower fastening points (27) of the second soil cultivation implement (23).

13. Distributor according to Claim 12, **characterized in that** the coupling supports (26) are assigned a stop (28) which limits the pivotability of said coupling support and therefore enables raising of the distributor (1) fixed to the three-point power lifter (2) of the tractor (3).

14. Distributor according to Claim 12 or 13, **characterized in that** each coupling support (26) is fastenable releasably, in particular by means of rapid-action closures, firstly to the bearing brackets (25) and secondly to
- the two lower fastening points of the three-point power lifter (2) of a tractor (3) and/or
- two lower fastening points (27) of the second soil cultivation implement (23).

15. Distributor according to any of Claims 1 to 14, **characterized in that**
- the first soil cultivation implement (20) is a packer roller and/or
- the second soil cultivation implement (23) is a rotary harrow.

## Revendications

1. Machine à distribuer agricole (1), notamment machine à semer, avec un bac de réserve (4) supporté par un cadre porteur (6) pour recevoir un produit à distribuer, au moins un organe de dosage placé en aval d'une ouverture de sortie (8) du bac de réserve (4) ainsi que des moyens transporteurs réalisés pour transporter le produit à distribuer dosé jusqu'à une pluralité de dispositifs de distribution (10), le cadre porteur (6) comportant d'une part deux patins porteurs (18) respectivement disposés au niveau de son côté inférieur et à une certaine distance latérale l'un de l'autre, ces patins étant réalisés pour fixer un premier appareil de traitement du sol (20), et le cadre porteur (6) comportant d'autre part un support de palier (34) notamment disposé pour l'essentiel à la même distance latérale des patins porteurs (18), ledit support de palier étant réalisé pour le positionnement d'une bielle supérieure (24) servant à la fixation amovible du cadre porteur (6) à un deuxième appareil de traitement du sol (23) ou à un tracteur (3) ;
- chaque patin porteur (18) étant fixé au niveau de l'extrémité inférieure par au moins un élément porteur (30) extérieur s'étendant vers le haut depuis le patin porteur (18) respectif avec une composante de direction d'extension verticale et étant incliné vers l'intérieur par rapport à un plan vertical (E₁) disposé parallèlement à la direction de conduite (F) selon un angle (α) compris entre - 10° et 60° ;
- chaque élément porteur (30) extérieur d'un patin porteur (18) respectif étant relié dans la région de son extrémité supérieure éloignée du patin porteur (18) avec au moins un élément porteur (33) intérieur ; et
- les éléments porteurs (30) extérieurs étant reliés entre eux à l'aide d'au moins un support transversal (32) disposé au-dessus du niveau du support de palier (34) ;
**caractérisée en ce que** chaque élément porteur (30) extérieur est relié, à l'aide de l'au moins un élément porteur (33) intérieur, au support de palier (34), l'élément porteur (33) intérieur s'étendant respectivement vers l'intérieur depuis l'élément porteur (30) extérieur respectif avec une composante de direction d'extension horizontale et étant incliné vers le haut par rapport à un plan horizontal (E₂) disposé sur le niveau de hauteur du support de palier (34) selon un angle (β) supérieur à 0° et inférieur à 90°, rendant superflu un renfort du bac de réserve (1) sur des éléments porteurs disposés en dessous du support de palier (34) et entre les deux patins porteurs (18).

2. Machine à distribuer selon la revendication 1, **caractérisée en ce que** les éléments porteurs (30) extérieurs et/ou les éléments porteurs (33) intérieurs s'étendent pour l'essentiel dans respectivement un plan disposé notamment parallèlement à la direction de conduite (F).

3. Machine à distribuer selon la revendication 1 ou 2, **caractérisée en ce qu'**un élément porteur (30) extérieur respectif comprend :
- respectivement au moins une partie de paroi (30c) portante dont les bords latéraux (30d) divergent vers le haut pour l'essentiel en forme de V notamment par rapport à un patin porteur (18) respectif ; ou
- respectivement au moins deux supports extérieurs (30a, 30b) sont reliés entre eux dans la région de son extrémité supérieure éloignée du patin porteur (18) à l'aide d'au moins un support longitudinal (31), les au moins deux supports extérieurs (30a, 30b) divergeant notamment pour l'essentiel en forme de V vers le haut par rapport à chaque patin porteur (18).

4. Machine à distribuer selon la revendication 3, **caractérisée en ce qu'**un élément porteur (30) extérieur respectif comprend :
- respectivement au moins une partie de paroi (30c) portante et que l'au moins un support transversal (32) reliant entre eux les éléments porteurs (30) extérieurs s'étend entre respectivement un bord latéral (30d) ou un bord (30e) supérieur d'un élément porteur (30) extérieur respectif, notamment entre respectivement deux zones d'angle de l'élément porteur (30) extérieur, entre son bord latéral (30d) et son bord supérieur (30e) ; ou
- respectivement au moins deux supports extérieurs (30a, 30b) reliés entre eux dans la région de son extrémité supérieure éloignée du patin porteur (18) à l'aide de l'au moins un support longitudinal (31) et que l'au moins un support transversal (32) reliant entre eux les éléments porteurs (30) extérieurs s'étend entre respectivement un support extérieur (30a) d'un élément porteur (30) extérieur respectif ou entre les supports longitudinaux (31) reliant entre eux les supports extérieurs (30a, 30b) respectifs.

5. Machine à distribuer selon l'une quelconque des revendications 1 à 4, **caractérisée en ce qu'**un élément porteur (33) intérieur respectif comprend :
- respectivement au moins une partie de paroi portante dont les bords latéraux divergent notamment depuis les extrémités opposées - s'étendant perpendiculairement à la direction de conduite (F) - du support de palier (34) pour l'essentiel en forme de V en direction de l'élément porteur (30) extérieur respectif ; ou
- respectivement au moins deux supports intérieurs (33a, 33b) divergeant notamment pour l'essentiel en forme de V depuis les extrémités opposées - s'étendant perpendiculairement à la direction de conduite (F) - du support de palier (34) en direction de l'élément porteur (30) extérieur respectif.

6. Machine à distribuer selon l'une quelconque des revendications 3 à 5, **caractérisée en ce que** les supports extérieurs (30a, 30b), les supports intérieurs (33a, 33b), les supports longitudinaux (31) et/ou l'au moins un support transversal (32) possèdent une extension de préférence linéaire, ces supports étant notamment réalisés pour l'essentiel en forme de tige.

7. Machine à distribuer selon l'une quelconque des revendications 1 à 6, **caractérisée en ce que** :
- un élément porteur (30) extérieur respectif est incliné vers l'intérieur par rapport au plan vertical (E₁) disposé parallèlement à la direction de conduite (F) selon un angle (α) compris entre 0° et 45°, notamment entre 5° et 40°, de préférence entre 10° et 35° ; et/ou
- un élément porteur (33) intérieur respectif est disposé de façon inclinée vers le haut par rapport au plan horizontal (E₂) disposé sur le niveau de hauteur du support de palier (34) selon un angle (β) compris entre 10° et 55°, notamment entre 15° et 50°, de préférence entre 20° et 45°.

8. Machine à distribuer selon l'une quelconque des revendications 1 à 7, **caractérisée en ce que** :
- le bac de réserve (6) repose au moins sur les deux éléments porteurs (30) extérieurs ainsi que sur l'au moins un support transversal (32) et le cas échéant sur les deux éléments porteurs (33) intérieurs ; ou
- les deux éléments porteurs (30) extérieurs et/ou l'au moins un support transversal (32) et/ou les deux éléments porteurs (33) intérieurs sont formés au moins en partie par les parties de cadre du bac de réserve (7).

9. Machine à distribuer selon l'une quelconque des revendications 1 à 8, **caractérisée en ce qu'**un entraînement (7) des moyens transporteurs est fixé au niveau d'au moins un des éléments porteurs (30) extérieurs, notamment parallèlement à son plan d'extension.

10. Machine à distribuer selon l'une quelconque des revendications 1 à 9, **caractérisée en ce que** son cadre porteur (6) s'appuie, en situation de fonctionnement, sur le premier appareil de traitement du sol (20) fixé aux patins porteurs (18).

11. Machine à distribuer selon l'une quelconque des revendications 1 à 10, **caractérisée en ce que** le premier appareil de traitement du sol (20) peut être fixé de façon amovible, notamment à l'aide de fermetures rapides (21), aux patins porteurs (18).

12. Machine à distribuer selon l'une quelconque des revendications 1 à 11, **caractérisée en ce que** chaque patin porteur (18) et/ou un cadre (19), pouvant y être fixé, du premier appareil de traitement du sol (20) est équipé d'au moins un support de palier (25) réalisé de façon à fixer de façon pivotante respectivement un support de couplage (26), chaque support de couplage (26) étant réalisé, au niveau de son extrémité opposée au support de palier (25) respectif, de façon à pouvoir être fixé de façon pivotante au niveau :
- des deux points de fixation inférieurs d'un système de relevage à trois points (2) d'un tracteur (3) ; et/ou
- des deux points de fixation (27) inférieurs du deuxième appareil de traitement du sol (23).

13. Machine à distribuer selon la revendication 12, **caractérisée en ce qu'**une butée (28) est associée aux supports de couplage (26), cette butée étant limitée dans sa capacité à tourner et permettant ainsi un soulèvement de la machine à distribuer (1) fixée au système de relevage à trois points (2) du tracteur (3).

14. Machine à distribuer selon la revendication 12 ou 13, **caractérisée en ce que** chaque support de couplage (26) peut être fixé de façon amovible, notamment à l'aide de fermetures rapides, d'une part aux supports de palier (25), d'autre part :
- aux deux points de fixation inférieurs du système de relevage à trois points (2) d'un tracteur (3) et/ou
- aux deux points de fixation (27) inférieurs du deuxième appareil de traitement du sol (23).

15. Machine à distribuer selon l'une quelconque des revendications 1 à 14, **caractérisée en ce que** :
- le premier appareil de traitement du sol (20) est un rouleau compacteur ; et/ou
- le deuxième appareil de traitement du sol (23) est une herse rotative.
